# EUROPÄISCHE PATENTANMELDUNG

(11) **EP 2 413 043 A2**
(43) Veröffentlichungstag der Anmeldung: **01.02.2012**
(21) Anmeldenummer: 11006053.0
(22) Anmeldetag: 23.07.2011
(51) Int. Cl.: F24D 3/08, F24D 17/00, F24H 1/52

(54) **Heizgerät**

(30) Priorität: 26.07.2010 AT 12482010
(71) Anmelder: Vaillant GmbH, 42859 Remscheid (DE)
(72) Erfinder: Wriske, Jochen, Dr., 42857 Remscheid (DE)
(74) Vertreter: Hocker, Thomas

(57) **Zusammenfassung**

Heizgerät mit einem Heizungsbrenner (1), einem mindestens zweiteiligen Wärmetauscher (2, 3) zum Abkühlen der Abgase des Heizungsbrenners (1), wobei der erste Wärmetauscher (2) im Abgasweg stromauf des zweiten Wärmetauschers (3) angeordnet ist, der erste Wärmetauscher (2) von einem Fluidstrom durchströmt wird und der zweite Wärmetauscher (3) von einem anderen Fluidstrom durchströmt wird, sowie einem Sekundärwärmetauscher (4) zum Übertragen von Wärme von dem einen Fluidstrom auf den anderen Fluidstrom, wobei der zweiten Wärmetauscher (3) mit einem Schichtenspeicher (5) in einem Kreislauf (6) verbunden ist.

## Beschreibung

Je weiter bei einem brenngasbetriebenen Heizgeräte das Abgas abgekühlt werden kann, desto mehr steigt der Wirkungsgrad. Je kälter das Kühlmedium ist, desto weiter kann das Abgas abgekühlt werden. Ist ein Heizgerät an einen Heizungskreislauf angeschlossen, so wird der Wirkungsgrad maßgeblich durch die Heizungsrücklauftemperatur bestimmt. Da Brauchwasser aus dem Versorgungsnetz in der Regel deutlich kälter als die Heizungsrücklauftemperatur ist, kann der Wirkungsgrad bei Brauchwassererwärmung nochmals gesteigert werden.

Aus DE 36 36 136 A1 ist ein brenngasbetriebenes Wasserheizgerät bekannt, bei dem im Abgasweg des Brenners ein erster Wärmetauscher, der mit einem Heizkreislauf verbunden ist, angeordnet ist. Im weiteren Verlauf des Abgasweges befindet sich ein zweiter Wärmetauscher, der mit kaltem Brauchwasser beaufschlagt werden kann. Mittels eines Sekundärwärmetauschers kann Wärme vom Heizungskreislauf auf das im zweiten Wärmetauscher vorgeheizte Brauchwasser übertragen werden. Ohne Brauchwasserzapfung ist diese Wirkungsgradsteigerung jedoch nicht möglich.

Der Erfindung liegt die Aufgabe zugrunde, den Wirkungsgrad eines Heizgerätes für Heizung und Brauchwasser auch dann steigern zu können, wenn zeitgleich zur Heizungsanforderung kein warmes Brauchwasser benötigt wird.

Dies wird gemäß den Merkmalen des unabhängigen Anspruchs 1 dadurch gelöst, dass bei einem Heizgerät mit einem Heizungsbrenner und mindestens zweiteiligem Wärmetauscher zum Abkühlen der Abgase des Heizungsbrenners der erste Wärmetauscher im Abgasweg stromauf des zweiten Wärmetauschers angeordnet ist. Die Wärmetauscher werden von unterschiedlichen Fluidströmen durchströmt. Ferner ist ein Sekundärwärmetauscher zum Übertragen von Wärme von dem einen Fluidstrom auf den anderen Fluidstrom vorgesehen. Erfindungsgemäß ist der zweiten Wärmetauscher mit einem Schichtenspeicher in einem Kreislauf verbunden ist. Der Schichtenspeicher verfügt über Wasser auf unterschiedlichem Temperaturniveau. Das kalte Wasser kann somit im zweiten Wärmetauscher genutzt werden, um die Abgase besonders weit abzukühlen und somit dem Abgas besonders viel thermische Energie zu entziehen.

Vorteilhafte Ausgestaltungen der Erfindung ergeben sich durch die Merkmale der abhängigen Ansprüche.

Ist, wie in Anspruch 2 beansprucht, der Schichtenspeicher im unteren Bereich sowohl mit einer Kaltwasserzulaufleitung, als auch mit dem Eingang des zweiten Wärmetauschers und der Ausgang des zweiten Wärmetauschers mit dem oberen oder mittleren Bereich des Schichtenspeichers verbunden, so wird kaltes Wasser aus dem Schichtenspeicher mit sehr hohem Wirkungsgrad im zweiten Wärmetauscher erhitzt und in einem höheren gelagerten Bereich im Schichtenspeicher erwärmt eingelagert. Der Schichtenspeicher ermöglicht hierbei eine Trennung der Temperaturschichtungen. Die für eine Speicherladung benötige Umwälzpumpe wird hierbei bevorzugt zwischen dem unteren Bereich des Schichtenspeichers und dem zweiten Wärmetauscher angeordnet, um thermisch weniger belastet zu werden.

Gemäß Anspruch 3 ist in der Verbindung des Ausgangs des zweiten Wärmetauschers mit dem oberen oder mittleren Bereich des Schichtenspeichers der Sekundärwärmetauscher angeordnet, so dass hierüber Wärme zwischen den beiden Fluidströmen übertragen werden kann.

Die Erfindung wird nun anhand der Figuren detailliert erläutert.

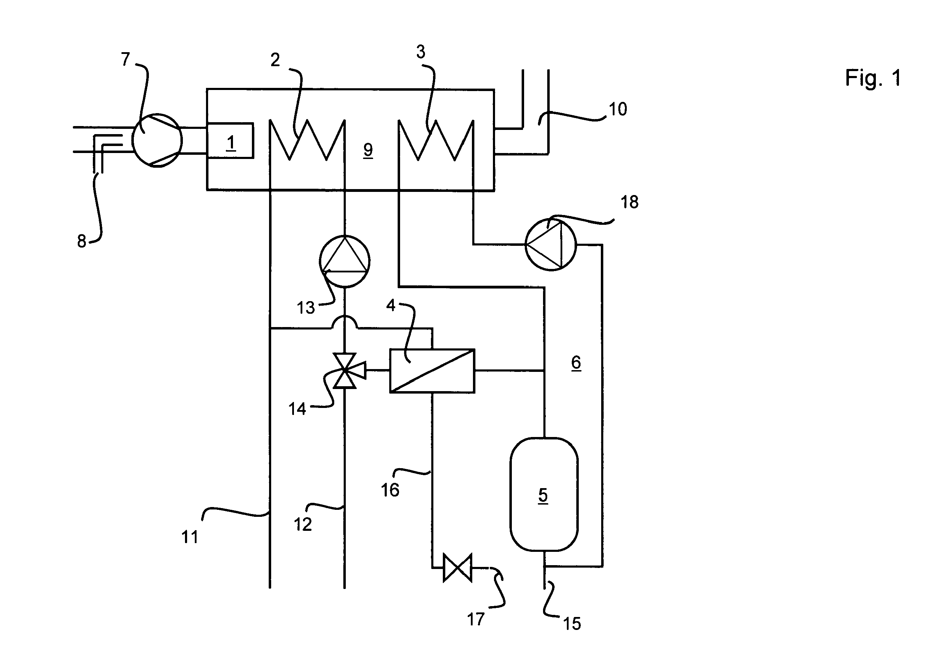

Figur 1 zeigt ein Heizgerät mit einem Heizungsbrenner 1, der von einem Gebläse 7 und einer Brenngaszufuhr 8 mit einem Brenngas-Luft-Gemisch gespeist wird. Die heißen Verbrennungsabgase des Heizungsbrenners 1 durchströmen die Brennkammer 9, in der sich seriell zwei Wärmetauscher 2, 3 befinden. Der erste Wärmetauscher 2 ist dabei im Abgasweg stromauf des zweiten Wärmetauschers 3 angeordnet. Am dem Heizungsbrenner 1 abgewandten Ende der Brennkammer 9 ist eine Abgasleitung 10 zur Leitung der in den beiden Wärmetauscher 2, 3 abgekühlten Abgase in die Umgebung angeordnet.

Der erste Wärmetauscher 2 ist mit seinem Eingang über ein Vorrangumschaltventil 14 und eine Umwälzpumpe 13 mit der Rücklaufleitung 12 eines Heizkreislaufs verbunden. Der Ausgang des ersten Wärmetauschers 2 ist mit der Vorlaufleitung 11 des Heizkreislaufs verbunden. Zwischen der Vor- und Rücklaufleitung 12 ist ein Sekundärwärmetauscher 4 angeordnet, wobei der Anschluss in der Rücklaufleitung 12 über das Vorrangumschaltventil 14 erfolgt.

Der zweite Wärmetauscher 3 ist über einen Brauchwasser führenden Schichtenspeicherladekreislauf 6 mit einem Schichtenspeicher 5 verbunden, wobei der untere Bereich des Schichtenspeichers 5 über eine Umwälzpumpe 18 mit dem Eingang des zweiten Wärmetauschers 3 und der Ausgang des zweiten Wärmetauschers 3 mit dem oberen Bereich des Schichtenspeichers 5 verbunden ist. Der untere Bereich des Schichtenspeichers 5 ist ferner mit einer Kaltwasserzulaufleitung 15 verbunden. Vom oberen Bereich des Schichtenspeichers 5 führt eine Leitung zu dem Sekundärwärmetauscher 4 und von diesem eine Warmwasserleitung 16 zu einer Zapfstelle 17.

Die Anordnung der notwendigen Sensoren im Heizungskreislauf und im oder am Schichtenspeicher entspricht dem Stand der Technik und ist nicht näher dargestellt.

Beim Heizungsbetrieb wird dem Heizungsbrenner 1 über das Gebläse 7 und die Brenngaszufuhr 8 einem Brenngas-Luft-Gemisch zugeführt und in der Brennkammer entzündet. Die heißen Abgase durchströmen zunächst den ersten Wärmetauscher 2, in dem Heizungswasser von der Rücklaufleitung 12 über den ersten Wärmetauscher 2 zur Vorlaufleitung 11 strömt, wobei die Umwälzpumpe 13 das Heizungswasser fördert. Im ersten Wärmetauscher 2 gibt das heiße Abgas thermische Energie an das Heizungswasser ab. Wie bei jedem Wärmetauscher gilt der Grundsatz, dass das wärmere Medium minimal auf eine Temperatur oberhalb der Temperatur des kälteren Mediums abgekühlt werden kann, wobei die maximale Wärmeübertragung bei einer Durchströmung im Gegenstromprinzip erreicht wird. Somit kann das Abgas minimal auf eine Temperatur nahe der Rücklauftemperatur abgekühlt werden. Abgase üblicher erdgasbetriebener Heizungsbrenner 1 besitzen einen Wasserdampfanteil von etwa 105 Gramm Wasserdampf pro trockenes Kilogramm Abgas. Der Taupunkt des Abgases liegt bei etwa 55°C. Dies verdeutlicht, dass bei üblichen Heizkreisläufen nur ein Teil des im Abgas enthaltenen Wasserdampfes auskondensiert und dessen Kondensationswärme genutzt werden kann. Das im ersten Wärmetauscher 2 abgekühlte Abgas durchströmt dann den zweiten Wärmetauscher 3, der zugleich von kaltem Brauchwasser aus dem unteren Bereich des Schichtenspeichers 5 durchströmt wird. Im zweiten Wärmetauscher 3 kann das Abgas bis zu einer Temperatur etwas oberhalb der Brauchwassertemperatur im unteren Bereich des Schichtenspeichers 5 abgekühlt werden. Diese Temperatur entspricht minimal der Temperatur, mit der Brauchwasser über die Kaltwasserzulaufleitung 15 zuströmt. Da diese Temperatur deutlich niedriger liegt als die Heizungsrücklauftemperatur, kann das Abgas des Heizungsbrenners 1 nochmals deutlich abgekühlt werden. Das so erwärmte Brauchwasser wird oben in den Schichtenspeicher 5 eingelagert. Dieser Prozess kann solange durchgeführt werden, bis der Schichtenspeicher 5 völlig geladen ist. Da die Abgase im ersten Wärmetauscher 2 bereits auf eine Temperatur deutlich unterhalb 100°C abgekühlt werden, besteht in diesem Fall keine Gefahr der Überhitzung im zweiten Wärmetauscher, der dann keine Wärme mehr aufnehmen kann.

Bei Brauchwasserbedarf wird Brauchwasser an der Zapfstelle 17 entnommen, woraufhin Kaltwasser über die Kaltwasserzulaufleitung 15 in den Schichtenspeicher 5 nachströmt. Der Druck der Brauchwasserversorgung sorgt hierbei für den Fluidtransport. Ist die Temperatur des Brauchwassers im oberen Bereich des Schichtenspeichers 5 hoch genug, so muss das Brauchwasser nicht weiter erhitzt werden. Andernfalls wird dem Brauchwasser im Sekundärwärmetauscher 4 Wärme zugeführt. Der Heizungsbrenner wird wie zuvor beschrieben betrieben. Das Vorrangumschaltventil 14 wird im Unterschied zum Heizungsbetrieb derartig umgeschaltet, dass eine Verbindung von der Vorlauf- 11 zur Rücklaufleitung 12 über den Sekundärwärmetauscher 4 hergestellt wird. Das warme Brauchwasser wird somit im Sekundärwärmetauscher 4 durch Wärmeübertragung vom Heizungswasser erwärmt. Gleichzeitig wird Brauchwasser aus dem unteren Bereich des Schichtenspeichers 5 über den zweiten Wärmetauscher 3 geführt und dabei erwärmt; dieser Brauchwasserstrom wird mit dem Brauchwasserstrom aus dem oberen Bereich des Schichtenspeichers 5 vermischt und gemeinsam dem Sekundärwärmetauscher 4 zur weiteren Erwärmung zugeführt. Optional kann Brauchwasser auch nur aus dem oberen oder unteren Bereich des Schichtenspeichers 5 entnommen werden.

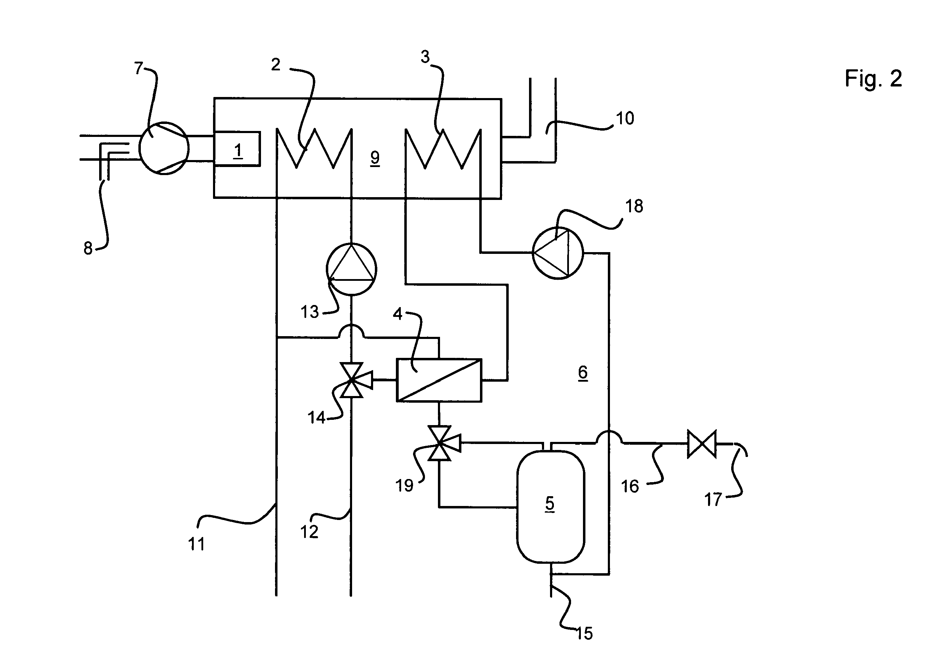

Das in Figur 2 dargestellte Heizgerät unterscheidet sich von dem in Figur 1 dargestellten Heizgerät auf der Brauchwasserseite. Der Ausgang des zweiten Wärmetauschers 3 ist direkt mit dem Sekundärwärmetauscher 4 verbunden. Erst über diesen Sekundärwärmetauscher 4 erfolgt der Zulauf zum Schichtenspeicher 5, wobei in dieser Zulaufleitung ein Dreiwegeventil 19 angeordnet ist. Dieses Dreiwegeventil 19 ermöglicht die Verbindung entweder mit dem oberen oder mittleren Bereich des Schichtenspeichers 5; gegebenenfalls kann auch ein Zulauf in beiden Bereiche erfolgen. Aus dem oberen Bereich des Schichtenspeichers 5 führt die Warmwasserleitung 16 direkt zur Zapfstelle 17.

Beim Heizungsbetrieb unterscheidet sich die Heizungsanlage nach Figur 2 von der Heizungsanlage nach Figur 1 dadurch, dass das im zweiten Wärmetauscher 3 erwärmte Brauchwasser über den Sekundärwärmetauscher 4 dem Schichtenspeicher 5 zugeführt wird. Da der Sekundärwärmetauscher 4 im Heizungsbetrieb aufgrund der Stellung des Vorrangumschaltventils 14 jedoch nicht von Heizungswasser durchströmt wird, wird in diesem auch keine Wärme übertragen. Ferner kann bei einer Heizungsanlage gemäß Figur 2 das erwärmte Brauchwasser über das Dreiwegeventil 19 sowohl dem oberen, als auch mittleren Bereich des Schichtenspeichers 5 zugeführt werden. Hiermit kann bedarfsgerecht auf die Temperaturschichtung im Schichtenspeicher 5 reagiert werden. So ist damit möglich, im oberen Bereich einen Teil Brauchwasser auf Solltemperatur zu bevorraten und Brauchwasser auf einem niedrigeren Niveau in den mittleren Bereich einzubringen.

Bei Brauchwasserzapfung an der Zapfstelle 17 strömt heißes Brauchwasser aus dem oberen Bereich des Schichtenspeichers 5 über die Warmwasserleitung 16; kaltes Brauchwasser strömt über die die Kaltwasserzulaufleitung 15 in den Schichtenspeicher 5 nach.

Zur Ladung des Schichtenspeichers 5 wird das Vorrangumschaltventil 14 derart geschaltet, dass der Sekundärwärmetauscher 4 von Heizungswasser durchströmt wird. Der Heizungsbrenner 1 wird in Betrieb genommen und gibt über seine Abgase Wärme an die beiden Wärmetauscher 2, 3 ab. Brauchwasser wird aus dem unteren Bereich des Schichtenspeicher 5 entnommen und im zweiten Wärmetauscher 3 vorgewärmt Das vorgewärmte Brauchwasser wird über den Sekundärwärmetauscher 4 geführt und nimmt dort Wärme vom Heizungswasser auf. Über das Dreiwegeventil 19 wird das heiße Brauchwasser dem oberen Bereich des Schichtenspeichers 5 zugeführt.

Um einen Heizungsbetrieb mit hohem Wirkungsgrad jederzeit zu ermöglichen, ist es ratsam, das Brauchwasser des Schichtenspeichers 5 nicht völlig bis unten zu erwärmen, sondern noch ein Teilvolumen auf unten auf niedrigem Niveau zu halten. Hierzu dient ein Temperatursensor auf einem vorgegebenen Niveau des Schichtenspeichers 5 bis zu dessen Positionierung herab der Schichtenspeicher 5 bei der Speicherladung erhitzt wird. Überschreitet die dort gemessene Temperatur einen vorgegebenen Schwellwert, so wird die Speicherladung beendet. Das kalte Brauchwasser unterhalb des Sensors dient dann der Brennwertsteigerung beim Heizungsbetrieb.

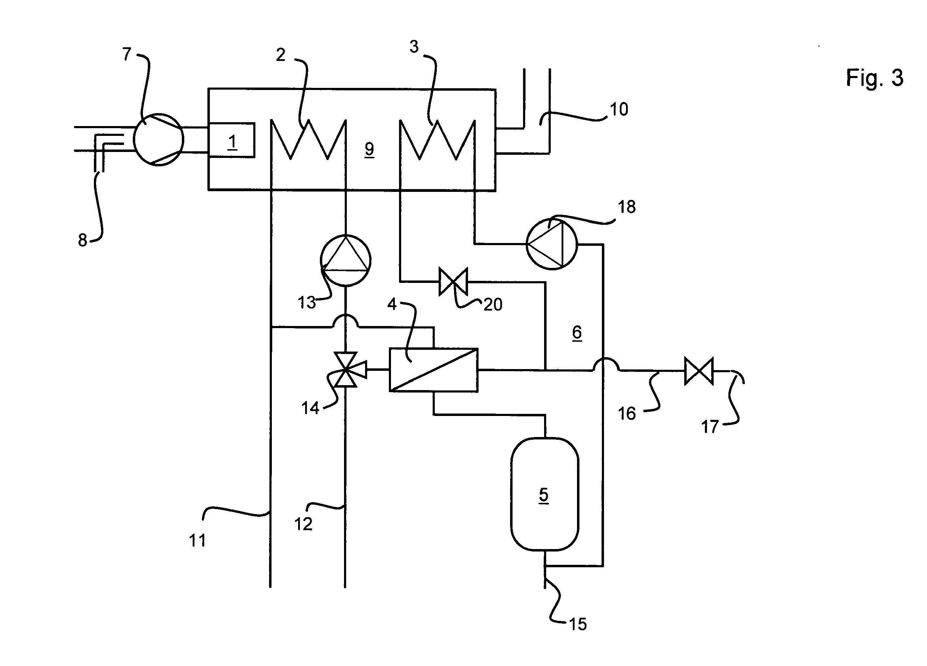

Das in Figur 3 dargestellte Heizgerät unterscheidet sich von dem in Figur 2 dargestellten Heizgerät dadurch, dass die Warmwasserleitung 16 an die Verbindungsleitung zwischen zweitem Wärmetauscher 3 und Sekundärwärmetauscher 4 angebunden ist und der Speicher 5 nur je einen oberen und unteren Anschlusspunkt, aber keinen Zulauf im mittleren Bereich besitzt, so dass auch das Dreiwegeventil 19 entfällt. Weiterhin ist in die Verbindungsleitung zwischen zweitem Wärmetauscher 3 und Warmwasserleitung 16 ein Wassermengenbegrenzer 20 eingebaut.

Im Heizungsbetrieb entspricht die Betriebsweise der des in Figur 2 beschriebenen Gerätes, wobei jedoch das gesamte Volumen des Speichers 5 zur Bevorratung von Brauchwasser auf einem niedrigeren Temperaturniveau ausgeschöpft wird. Bei Brauchwasserzapfung wird Brauchwasser an der Zapfstelle 17 entnommen, woraufhin Kaltwasser über die Zulaufleitung 15 in den Schichtenspeicher 5 nachströmt. Ja nach Brauchwassertemperatur im oberen Bereich des Speichers 5 wird das Brauchwasser, analog zum bei Figur 1 beschriebenen Verfahren, im Sekundärwärmetauscher 4 weiter erhitzt oder strömt - falls sich das Brauchwasser im oberen Bereich des Speichers 5 bereits auf Brauchwassersolltemperatur befindet - ohne Betrieb des Brenners 1 und weitere Wärmezufuhr durch den Sekundärwärmetauscher 4 zur Warmwasserleitung 16. Bei nicht ausreichender Brauchwassertemperatur im Speicher 5 und dementsprechend notwendigen Betrieb des Brenners 1 strömt parallel dazu, angetrieben durch den Druck der Brauchwasserversorgung ein Teil des einströmenden Kaltwassers in der Zulaufleitung 15 durch den Ladekreis 6 über die Ladepumpe 18 und den zweiten Wärmetauscher 3 in die Warmwasserleitung 16 und vermischt sich dort mit dem über den Sekundärwärmetauscher 4 strömenden erwärmten Brauchwasser.

Um eine gute Regelbarkeit des an der Zapfstelle 17 ausströmenden Mischwassers zu gewährleisten, muss der über den Ladekreis 5 strömende Teilwasserstrom klein gegenüber dem aus dem Schichtenspeicher 5 strömenden Warmwasserstrom sein. Dazu wird über den Wassermengenbegrenzer 20 der Druckverlust im Ladekreis soweit vergrößert, dass dieser den Druckverlust von Schichtenspeicher 5 und Sekundärwärmetauscher 4 deutlich übersteigt. Ein ähnlicher Effekt kann auch durch kontinuierliche Regelung der Pumpe 18 erreicht werden.

Das in Figur 3 dargestellte Heizgerät unterscheidet sich von dem in Figur 1 dargestellten Heizgerät ferner dadurch, dass zur Vermeidung der Bildung von Legionellen im Speicher 5 dieser auch auf eine höhere Temperatur, als im zweiten Wärmetauscher 3 verfügbar ist, aufgeheizt werden kann. Dazu wird die bei Figur 2 dargestellte Ladung des Schichtenspeichers 5 durchgeführt, bei der unter Verwendung des Heizungsbrenners 1, des Vorrangumschaltventils 14 und des Sekundärwärmetauschers 4 zusätzliche Wärme über den Ladekreis 6 in den Schichtenspeicher 5 eingebracht wird, so dass dieser zumindest kurzeitig auf eine Temperatur oberhalb 70°C erwärmt wird, wodurch die Legionellen abgetötet werden.

Erfindungsgemäß sind auch nicht explizit beschriebene Kombinationen zuvor beschriebener Details möglich. Die Erfindung beschränkt sich somit nicht auf die beiden Ausführungsbeispiele. Ferner können weitere übliche Bestandteile einer Heizungsanlage, zum Beispiel die Einbindung einer solarthermischen Anlage, kombiniert werden.

### Bezugszeichenliste

- Heizungsbrenner: (1)
- erste Wärmetauscher: (2)
- zweiten Wärmetauschers: (3)
- Sekundärwärmetauscher: (4)
- Schichtenspeicher: (5)
- (Schichtenspeicherlade-)Kreislauf: (6)
- Gebläse: (7)
- Brenngaszufuhr: (8)
- Brennkammer: (9)
- Abgasleitung: (10)
- Vorlaufleitung: (11)
- Rücklaufleitung: (12)
- Umwälzpumpe: (13)
- Vorrangumschaltventil: (14)
- Kaltwasserzulaufleitung: (15)
- Warmwasserleitung: (16)
- Zapfstelle: (17)
- Umwälzpumpe: (18)
- Dreiwegeventil: (19)
- Wassermengenbegrenzer: (20)

## Patentansprüche

1. Heizgerät mit einem Heizungsbrenner (1), einem mindestens zweiteiligen Wärmetauscher (2, 3) zum Abkühlen der Abgase des Heizungsbrenners (1), wobei der erste Wärmetauscher (2) im Abgasweg stromauf des zweiten Wärmetauschers (3) angeordnet ist, der erste Wärmetauscher (2) von einem Fluidstrom durchströmt wird und der zweite Wärmetauscher (3) von einem anderen Fluidstrom durchströmt wird, sowie einem Sekundärwärmetauscher (4) zum Übertragen von Wärme von dem einen Fluidstrom auf den anderen Fluidstrom, **dadurch gekennzeichnet, dass** der zweiten Wärmetauscher (3) mit einem Schichtenspeicher (5) in einem Kreislauf (6) verbunden ist.

2. Heizgerät nach Anspruch 1, **dadurch gekennzeichnet, dass** der Schichtenspeicher (5) im unteren Bereich sowohl mit einer Kaltwasserzulaufleitung (15), als auch mit dem Eingang des zweiten Wärmetauschers (3) verbunden ist, wobei vorzugsweise in der Verbindung zwischen dem unteren Bereich des Schichtenspeichers (5) mit dem zweiten Wärmetauscher (3) eine Umwälzpumpe (18) angeordnet ist, und der Ausgang des zweiten Wärmetauschers (3) mit dem oberen oder mittleren Bereich des Schichtenspeichers (5) verbunden ist.

3. Heizgerät nach Anspruch 2, **dadurch gekennzeichnet, dass** in der Verbindung des Ausgangs des zweiten Wärmetauschers (3) mit dem oberen oder mittleren Bereich des Schichtenspeichers (5) der Sekundärwärmetauscher (4) angeordnet ist.
